Europäisches Patentamt

European Patent Office

Office européen des brevets

(11) Veröffentlichungsnummer: **0 498 943 A1**

# EUROPÄISCHE PATENTANMELDUNG

(21) Anmeldenummer: **91119994.1**

(22) Anmeldetag: **23.11.91**

(51) Int. Cl.5: **G06F 9/44**, G06F 15/40, G05B 13/02

(30) Priorität: **30.01.91 DE 4103128**

(43) Veröffentlichungstag der Anmeldung:
**19.08.92 Patentblatt 92/34**

(84) Benannte Vertragsstaaten:
**AT BE CH DE DK ES FR GB GR IT LI LU NL SE**

(71) Anmelder: **KRONE Aktiengesellschaft**
**Beeskowdamm 3-11**
**W-1000 Berlin 37(DE)**

(72) Erfinder: **Siefker, Hartmuth**
**Egsdorfer Weg 12A**
**W-1000 Berlin 49(DE)**
Erfinder: **Janke, Michael**
**Winterfeldstrasse 38**
**W-1000 Berlin 30(DE)**
Erfinder: **Friese, Christian**
**Friesenstrasse 12**
**W-1000 Berlin 61(DE)**

(54) **Echtzeit-Prozessexpertensystem.**

(57) Die Erfindung bezieht sich auf ein Echtzeit-Expertencomputersystem, daß in der Lage ist, Expertenmaßnahmen zur Durchführung von Folgerungen ausführen zu können.

Bekannt sind Systeme, die zwei Computer umfassen, wobei der eine die normale Betriebsdatenverarbeitung und der andere die Expertendatenverarbeitung durchführt. Nachteilig ist der hohe Hard- und Softwareaufwand und die langen Antwortzeiten.

Die Erfindung sieht vor, den assoziativen Erfahrungsspeicher vom Computer zu separieren und den Vergleich eines Datensatzes mit den Erfahrungsdaten durch einen speziellen Hardwarevergleicher durchzuführen. Durch die spezielle Wahl der Form des Datensatzes eines Zustandes wird der Vergleich zusätzlich beschleunigt. Die Erfindung ist geeignet, zum Regeln und Steuern von Prozessen in Echtzeit auf Basis einer Expertendatenverarbeitung eingesetzt zu werden.

FIG.1

EP 0 498 943 A1

Die Erfindung betrifft ein Echtzeit - Prozeßexpertensystem, das in der Lage ist, Expertenmaßnahmen zur Durchführung von Folgerungen ausführen zu können, wobei die Expertenmaßnahmen in Echtzeit Prozesse überwachen und steuern.

Elektronische Systeme, die über eine gewisse Intelligenz verfügen, in dem Sinne, daß sie als lernfähig betrachtet werden können und Entscheidungen nicht nur nach festen Vorgaben, sondern nach ihren erlernten Erfahrungen treffen, werden als KI-Systeme bezeichnet, wobei KI für künstliche Intelligenz steht.

Bekannt sind Echtzeit-Expertencomputersysteme, wie sie in der DE OS 39 08 879 beschrieben sind, die sowohl eine Expertendatenverarbeitung, in der Folgerungen unter Verwendung von Erfahrungsdaten gezogen werden, als auch eine übliche Betriebsdatenverarbeitung vornehmen können. Das dort beschriebene System besteht aus zwei miteinander gekoppelten Standardcomputern, wobei der erste die normale Betriebsdatenverarbeitung sowie das Sammeln und Ausgeben von Daten, insbesondere Erfahrungsdaten und Folgerungen, und der zweite die Expertendatenverarbeitung vornimmt.

Im zweiten Computer werden die Erfahrungsdaten, die vom ersten Computersystem abgegeben werden, in einem Speicher abgelegt.

Das für das Ziehen von Schlüssen notwendige Wissen ist ebenfalls in dem zweiten Computer gespeichert. Unter Verwendung der Erfahrungsdaten und des vorhandenen Wissens werden Folgerungen geschlossen, die an den ersten Computer übergeben werden. Dieser führt die übliche Betriebsdatenverarbeitung unter Verwendung der Folgerungen durch. Der Eingang von Daten und der darauf reagierende Ausgang von insbesondere auf die Folgerungsdaten aufbauenenden Daten soll bei diesem System in Echtzeit erfolgen, d.h. innerhalb einer vorgegebenen Antwortzeit muß eine Reaktion auf Eingangsdaten abgegeben werden. Dabei ist über die Länge der Antwortzeit keine Aussage getroffen.

Als nachteilig wird empfunden, daß die bekannten Expertsysteme nur mit einem großen Hard- und Softwareaufwand realisiert werden können, insbesondere bedeutet dies, daß nur Großrechner oder Rechner der mittleren Datenverarbeitung zum Einsatz kommen. Die Antwortzeiten bei derartigen Software-Lösungen ist zu lange, da bei jeder Entscheidung große Datenmengen durchsucht werden müssen. Wird nun das Expertensystem, wie bei dem bekannten Stand der Technik, in einen eigenen Rechner ausgelagert, so führt die Verwaltung und Durchsuchung der Erfahrungsdaten bei wachsendem Erfahrungsschatz zu einer immer größer werdenden Verringerung der Arbeitsgeschwindigkeit der CPU des Expertencomputers und somit insgesamt zu langen Antwortzeiten des Gesamtsystems. Somit ist ein Einsatz eines derartigen Systems zum Regeln und Steuern externer Prozesse nicht möglich, da die Systeme zu groß, zu langsam, zu teuer und damit insgesamt unwirtschaftlich sind.

Es ergibt sich die Aufgabe, ein Echtzeit-Expertencomputersystem zu entwickeln, das klein, robust und preisgünstig ist und kurze Antwortzeiten beim Durchsuchen der Erfahrungsdaten bei möglichst geringstem Aufwand aufweist.

Die Lösung der Aufgabe ergibt sich aus den Merkmalen des Anspruches 1.

Um den erheblichen Aufwand beim Durchsuchen der Erfahrungsdaten in angemessener Zeit und geringem Aufwand, d.h. geringem Soft-und Hardwareaufwand, zu bewältigen, wird erfindungsgemäß das Durchsuchen und Vergleichen der Erfahrungsdaten in einer speziellen Hardware, der Assoziativ-Speichereinheit durchgeführt und nicht einer CPU überlassen, deren Arbeitsgeschwindigkeit mit wachsendem Erfahrungsschatz abnimmt. Die Erfahrungsdaten können dabei neu gemessene oder bereits bekannte Daten sein. Diese sind in der Speichereinheit abgelegt. Das Durchsuchen oder Vergleichen dieser Daten nach oder mit vorgegebenen Mustern wird von einer in Hardware ausgeführten Komparatoreinheit durchgeführt, wobei das Ergebnis des Suchens bzw. Vergleichens von der Computereinheit zum Steuern, Regeln oder Überwachen externer Prozesse in Echtzeit benutzt wird.

Die Assoziativ-Speichereinheit umfaßt einen digitalen Fensterkomparator mit vorgeschalteteM Puffer und dem Assoziativ-Speicher, die beide von einer CPU verwaltet werden. Das erfindungsgemäße Echtzeit-Expertencomputersystem ist auf der Seite des Hauptrechners mit Sensoren oder Meßeinrichtungen versehen, die nach bestimmten vorgegebenen Kriterien Messungen durchführen und somit Daten erstellen, wobei das gemessene System durch Parameter charakterisiert ist. Die verschiedenen Parameter einer Messung werden zusammengefaßt und bilden zusammen mit einer zur Verwaltung benötigten Overheadinformation einen Zustand bzw. ein Erfahrungsdatum. Parameter können beispielweise Temperatur, Luftfeuchte, Verkehrsdichte o.ä. sein. Es können zu den gemessenen Parametern noch andere hinzutreten, die beispielsweise fest vorgegeben sind, wie dies bei Systemkonstanten der Fall ist, oder die Parameter werden durch Operationen wie Umformen o.ä. aus mehreren anderen Parametern indirekt gebildet.

Zustände gehen durch Veränderung von Parametern in andere Zustände über. Diese Übergänge werden durch Übergangsvektoren, bzw. Transitionen, beschrieben. Eine Transition enthält Informationen über den Ausgangs-und Endzustand, Informationen über die Wahrscheinlichkeit bzw. Güte des Überganges, Informationen über die Eingriffe des Regelsystems, welche zu dem Übergang geführt haben und die Qualität des Endzustandes in Bezug auf die Zielfunktion. Die Definition der Güte einer Transition wird von der Anwendung des Systems bestimmt. Hat nun das Computersystem ein Erfahrungsdatum ermittelt, so sucht es in dem vorhandenen Erfahrungsschatz des Assoziativ-Speichers nach einem gleichen oder ähnlichen Zustand. Ähnliche Zustände sind dabei solche, die innerhalb vorgegebener Toleranzgrößen mit dem aktuellen Erfahrungsdatum übereinstimmen. Der zu vergleichende Datensatz wird mit den Toleranzen in beiden Richtungen und den Suchkriterien von der Assoziativ-CPU über eine Schnittstelle übernommen und in einen Datenpuffer abgelegt. Der digitale Fensterkomparator überprüft die im Assoziativ-Speicher abgelegten Erfahrungsdaten auf Ähnlichkeit mit dem zu untersuchenden Zustand. Gefundene ähnliche Erfahrungsdaten oder Zustände werden von der Assoziativ-CPU abgespeichert. Nach der Beendigung des Hardware-Vergleiches werden die gefundenen Zustände dem Computersystem übermittelt, das auf Grund dieser Daten entsprechende Handlungen vornimmt. Das ursprüngliche Erfahrungsdatum kann in den Erfahrungsspeicher aufgenommen werden. Somit wird eine intelligente, lernende Regelung möglich. Mittels des vorherigen Zustandes kann die Transition zwischen den Zuständen ermittelt und klassifiziert werden. Die bereits durchgeführten Transitionen werden abgespeichert, d.h., daß System weiß, was es bereits durchgeführt hat.

Durch die Beschränkung der Größe des Erfahrungsspeichers ergibt sich eine maximale Anzahl von Zuständen. Wird diese Anzahl durch Abspeichern eines neuen Zustandes überschritten, so wird ein alter Zustand gelöscht, das System kann also Zustände sozusagen vergessen. Somit wird durch die Beschränkung der Speichergröße eine maximale Antwortzeit garantiert.

Als besonders vorteilhaft wird herausgestellt, daß durch den hardwaremäßigen Vergleich der Erfahrungsdaten mittels einer programmierbaren hochintegrierten Schaltung das Suchen sehr schnell durchgeführt wird, so daß der Einsatz des Gesamtsystems zum Steuern und Regeln möglich ist. Desweiteren ist es möglich, mehrere der Echtzeit-Expertencomputersysteme zu vernetzen, so daß ein LAN (Local Area Network) entsteht.

Die Erfindung ist nachfolgend anhand zweier bevorzugter Ausgestaltungen näher erläutert. Es zeigen:

Fig. 1    ein Blockschaltbild eines erfindungsgemäßen Echtzeit-Expertencomputersystens,

Fig. 2    ein Blockschaltbild der ersten bevorzugten Ausführungsform der Assoziativ-Speichereinheit,

Fig. 3    ein Blockschaltbild der zweiten bevorzugten Ausführungsform der Assoziativ-Speichereinheit,

Fig. 4    ein Blockschaltbild des digitalen Fensterkomparators,

Fig. 5    ein Ablaufdiagramm des Datenflusses im Gesamtsystem,

Fig. 6    ein Ablaufdiagramm des Mikroprogramms der Assoziativ-CPU und

Fig. 7    eine Anwendung der Erfindung als Regelsystem im Straßenverkehr.

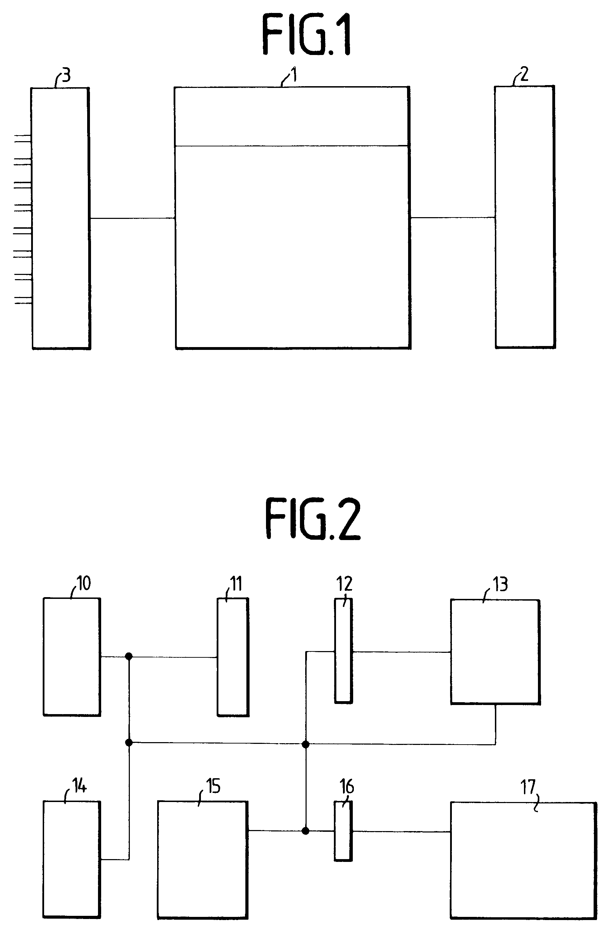

Fig. 1 zeigt ein Prinzip eines erfindungsgemäßen Echtzeit-Expertencomputersystems. Ein Computer 1 ist mit einer Assoziativ-Speichereinheit 2 verbunden. Bevorzugt wird ein MS-DOS kompatibler Industrierechner eingesetzt, jedoch ist die Anwendung nicht auf einen Rechner diesen Typs beschränkt, sondern im Prinzip mit jedem Computersystem möglich. Der Rechner 1 ist mit einem echtzeitfähigen Betriebsystem versehen, beispielsweise MS-DOS, oberhalb dem als Anwendungsprogramm die Expertensoftware installiert ist. Die Hardwareausstattung entspricht dem üblichen Industriestandard und enthält einen Mikroprozessor, 1 MB Systemspeicher, EGA-Grafik, 256 KB Bildspeicher, eine AT kompatible Floppy Disk, serielle und parallele Schnittstellen und eine batteriegepufferte Echtzeituhr. Mit dem Computer 1 ist eine Ein/Ausgabeeinheit 3 verbunden, die zur Kommunikation mit dem zu steuernden Prozeß dient. Über die Ein/Ausgabeeinheit 3 werden die gemessenen Daten der Prozeßparameter in den Computer 1 und die Steuersignale zum Regeln des Prozesses transferiert. Die Ein/Ausgabeeinheit 3 ist in dem Ausführungsbeispiel über einen ECB-Bus und die Assoziativ-Speicher- und Komparatoreinheit 2 über einen PC-Bus mit dem Computer 1 verbunden.

In Fig. 2 ist das Blockschaltbild der ersten Ausführungsform der Assoziativ-Speichereinheit 3 gegeben. Diese wird gebildet aus einem digitalen Fensterkomparator 13 und einem Assoziativ-Speicher 17. Dem Komparator vorgeschaltet ist ein Pufferelement 12, bestehend aus drei 256 Byte tiefen statischen RAM-Bausteinen. Der Assoziativ-Speicher 17 wird von einem DRAM Controller mit 4 MB dynamischen RAM gebildet. Ihm vorgeschaltet ist ein Treiber 16. Der Speicher 17 und der Komparator 13 werden von einer CPU 15 verwaltet und sind mit ihr verbunden. Als CPU können die gängigen Mikroprozessoren verwendet werden. Zu der CPU 15 gehört ein als EPROM ausgebildeter Speicherbaustein 11, in dem das Mikroprogramm und der mögliche Befehlssatz der CPU 15 abgelegt sind. Die gesamte Einheit 2 wird mittels eines Interfaces (Schnittstelle) 10 mit dem Computer 1 verbunden, d.h. in dessen Bussystem eingesetzt. Zum Sichern der im Speicher 17 abgelegten Erfahrungsdaten enthält die Einheit 2 eine zweite Schnittstelle 14. An dieser Backup-Schnittstelle 14 kann ein externes Backup-Gerät, wie ein Sicherungsbandgerät oder eine Speicherplatte, angeschlossen werden. Somit ist ein Sichern oder Backup der Daten möglich. Die einzelnen Elemente 10 bis 17 sind untereinander mit einem zentralen Bus 18 verbunden, wobei der Puffer 12 sich zwischen dem Komparator 13 und dem Bus 18, und der Treiber 16 sich zwischen dem Assoziativ-Speicher 17 und dem Bus 18 befindet. Der Vergleicher 13 ist mit einer zweiten Verbindung direkt mit dem Bus 18 verbunden, die u.a. zum Laden der Daten aus dem Erfahrungsspeicher 17 dient. Der Treiber 16 dient nur zum Treiben des dynamischen Speichers 17 und dazu, den Bus 18 unabhängig von dem inneren Bus des DRAM-Controllers 17 zu betreiben.

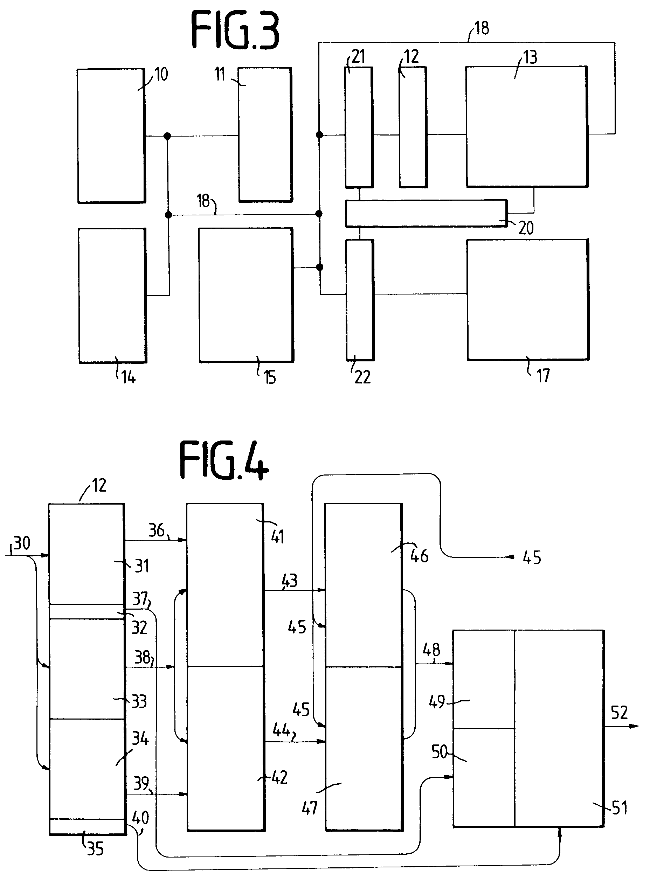

Fig. 3 zeigt die zweite bevorzugte Ausführungsform der Erfindung. Die Assoziativ-Speichereinheit enthält ein PC-Interface 10, ein Backup - Interface 14, einen Mikroprammspeicher 11, eine Assoziativ-CPU 15, einen digitalen Fensterkomparator 13 und einen Assoziativ-Speicher 17, die über einen zentralen Bus 18 miteinander verbunden sind. Dabei ist der Speicher 17 über einen Zähler 22 mit dem Bus 18 verbunden. Der Fensterkomparator 13 ist mit einem Pufferspeicher 12 verknüpft, der wiederum über einen Zähler 21 an den Bus 18 angeschlossen ist. Der Fensterkomparator 13 wird über eine Logik 20 angesteuert, die weiterhin über Verbindungen die Zähler 21 und 22 kontrolliert. In dieser zweiten Ausführungsform wird für die Speichereinheit 17 ein schnelles statisches RAM eingesetzt, wodurch die Zugriffszeit auf den Speicher verkürzt wird und ein Refresh entfällt. Durch die Verwendung einer speziellen Logik 20 und der Zähler 21 und 22 wird der Vergleich zweier Zustände wesentlich beschleunigt, diese Beschleunigung kann einen Faktor 10 gegenüber der ersten Ausführungsform betragen. Der Vergleich im digitalen Fensterkomparator 13 wird nunmehr anstelle der CPU 15 von der speziellen Logik 20 gesteuert, wodurch desweiteren die Adressinformation von dem Zähler 22 anstelle der CPU 15 an den Speicher 17 angelegt wird. Ebenso wird die Steuerung der Adressen des Puffers 12 nunmehr durch einen Zähler 21 vorgenommen. Dadurch wird erreicht, daß die Leistungsfähigkeit der schnellen Speicherelemente voll ausgenutzt wird. Die CPU 15 wird damit nur noch zu Beginn und zum Ende eines Vergleiches aktiv. In Fig. 4 ist das Blockschaltbild des digitalen Fensterkomparators 13 mit seinem vorgeschalteten Puffer 12 dargestellt. Die zu vergleichenden Daten werden über den Eingang 30 in den Puffer 12 geladen. Ein derartiger Datensatz besteht aus einem Zustandsvektor, der in den Speicherbereich 33 geladen wird. Ein Zustand besteht in der bevorzugten Ausführungsform aus 256 Bytes und enthält einen Kopf und bis zu 56 einzelne Parameter. Der Kopf ( Header ) taucht einmal am Anfang des Datensatzes und einmal an dessen Ende in inverser Form auf. Dadurch kann der intelligente Hardware-Vergleicher den Datensatz wahlweise mit dem gleichen Algorithmus von vorne und von hinten vergleichen. Sind dann in den jeweiligen Endbereichen des Datensatzes die relevanten Parameter abgelegt und gibt der Hauptrechner noch die Suchrichtung an, so kann das Vergleichsverfahren dadurch erheblich beschleunigt werden.

Der Kopf des Datensatzes umfaßt 16 Byte und enthält eine Zustandsnummer ( 2 Byte ), die der Kennzeichnung des Zustandes dient, einen Zustandstyp ( 1 Byte ), der der Unterscheidung von Typen dient, eine Zustandsqualität ( 1 Byte ), die die Güte des Zustandes in Bezug auf die Zielfunktion definiert, und einen Hinweisvektor auf die Übergangsliste ( Pointer, 3 Byte), der auf eine Adresse im Speicher zeigt, ab der die Liste der Übergangsvektoren eines bestimmten Zustandes anfängt. In der bevorzugten Ausführungsform befindet sich diese Liste im Speicher des Hauptrechners 1. Es ist aber ebensogut denkbar, daß sich diese Liste in einem separaten Speicher, der an den Bus 18 angeschlossen ist, befindet oder im Assoziativspeicher 17 abgelegt ist. Übergänge sind dadurch definiert, daß durch Veränderung von Parametern Zustände in andere Zustände übergehen. Diese Übergänge werden durch Übergangsvektoren ( Transitionen ) geschrieben. Sie enthalten neben den Quell- und Ziel-Zuständen auch Informationen über die Wahrscheinlichkeit des Überganges ( Häufigkeit ) und gegebenenfalls Informationen über die Eingriffe des Systems, die zu dem Übergang geführt haben. Da zu einem Zustand im Prinzip verschiedene Übergänge zu anderen Zuständen gehören können, gibt es pro Zustand einen Zeiger ( Pointer ) auf den Anfang einer Liste, die wiederum die eigentlichen Transitionen enthält. Eine derartige Liste besteht aus einem Listenkopf ( 4 Byte ), der die Anzahl der Übergänge ( 2 Byte ) und die Nummer des Quellzustandes ( 2 Byte ) enthält. Die eigentliche Liste hat pro Übergang 8 Byte reserviert, wobei jeder Übergang aus einer Aktionsnummer ( 1 Byte ), der Häufigkeit des Überganges ( 2 Byte ), der Nummer des Zielzustandes ( 2 Byte), der Qualität des Zielzustandes ( 1 Byte ) und einer Reserve ( 2 Byte ) besteht.

Desweiteren enthält der Zustandskopf eine Reserve von 9 Byte.

Der Hauptteil eines Zustandsvektors enthält die Parametereinträge, die in der erfindungsgemäßen Ausführungsform aus 56 x 4 Byte bestehen, d.h. je Parameter ist ein fester Bereich von 4 Byte reserviert, dessen Struktur aus einer Parameternummer ( 1 Byte ), einem Wert ( 1 Byte ) und einer Reserve von ( 2 Byte ) besteht. Die Parameternummer ist dabei stellvertretend für eine Meßgröße wie beispielsweise Temperatur, Luftfeuchte oder Verkehrsdichte. Es können aber auch errechnete oder abstrakte Werte sein, zu denen keine direkt meßbare Größe gehört. Ein Beispiel hierfür wäre die Summe der Verkehrsbelastung aus mehreren Straßen. Der Parameterwert kennzeichnet den Zahlenwert, der zu dem entsprechenden Parameter gehört.

Um nunmehr einen Fenstervergleich zu ermöglichen, werden zu einem zu vergleichenden Zustand jeweils positive und negative Toleranzen angegeben. Diese Toleranzen beziehen sich auf die einzelnen in einem Zustand enthaltenen Parameter. Die positiven Toleranzen werden im Bereich 31 und die negativen Toleranzen im Bereich 34 abgelegt. In den Bereichen 32 und 35 sind die Suchkriterien angegeben, die beispielsweise festlegen, in welcher Reihenfolge die Parameter des zu vergleichenden Zustandes durchsucht werden sollen oder die angeben, ob ein bestimmter Parameter relevant ist oder nicht. Die Suchkriterien 32 werden über die Verbindung 37 in einen Zähler 50 eingegeben, während die Kriterien 35 über eine Leitung 40 in die Bewertungslogik 51 einfließen. Die positiven Toleranzen werden über die Leitung 36 in einen Addierer 41 eingespeist. Entsprechend werden die negativen Toleranzen über die Leitung 39 in einen Subtrahierer 42 geleitet. In der bevorzugten Ausführungsform wird dabei jeweils ein Parameter abgehandelt, d.h. pro Takt wird ein Byte übergeben. Der entsprechende Parameter des in 33 eingespeisten Zustandes wird über die Leitung 38 auf den Addierer 41 und den Subtrahierer 42 gegeben. Aus dem Wert des Parameters und der dazugehörigen positiven Toleranz bildet der Addierer 41 einen oberen Wert und aus der negativen Toleranz mit demselben Parameterwert errechnet der Subtrahierer 42 entsprechend einen unteren Wert. Der obere Wert wird über die Verbindung 43 auf einen Komparator 46 und der untere Wert entsprechend über die Leitung 44 auf einen weiteren Komparator 47 gegeben. Dort werden sie mit den entsprechenden Parametern eines Zustandes aus dem Erfahrungsspeicher 17 verglichen, die über eine Leitung 45 in die Komparatoren 46 und 47 gelangen. Das Ergebnis beider Vergleiche wird über die Verbindung 48 auf einen Zähler 49 gegeben. Die Information des Zählers 49 gelangt zusammen mit derjenigen des Zählers 50 in eine Bewertungslogik 51, die gleichzeitig einen Eingang 40 aufweist, über den direkt auf die Suchkriterien in der Einheit 35 zugegriffen wird. Das Ergebnis der Bewertungslogik 51 wird über die Leitung 52 in die Assoziativ-CPU 15 transferiert, die entsprechende Aktionen veranlasst.

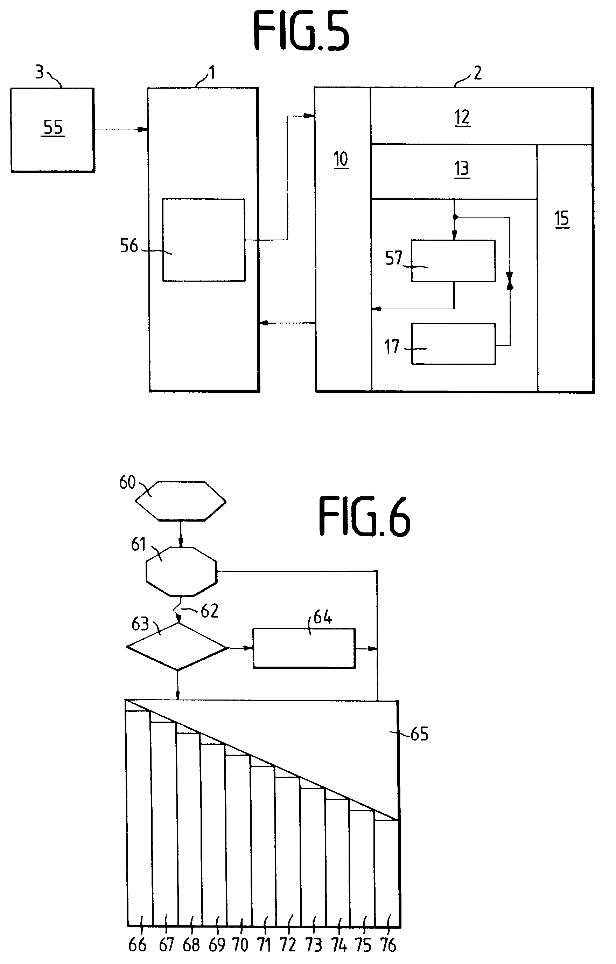

In Fig. 5 ist der Datenfluß im Gesamtsystem dargestellt. Ein Meßwertaufnehmer 55 (Sensor) bestimmt einen Zustandsparameter. Die Anzahl der Meßwertaufnehmer 55 wird von der Anzahl der zu bestimmenden Parameter festgelegt. Über die Ein/Ausgabeeinheit 3 gelangt die Information in den Rechner 1. Dort wird aus den gemessenen oder sonstwie bestimmten Parametern ein Datensatz 56 fester Länge, hier 256 Bytes, gebildet. Dieser Datensatz entspricht einem Zustand des zu regelnden Systems. Die genaue Form des Datensatzes wurde bereits in der Beschreibung der Fig. 4 abgehandelt. Wichtig ist, daß die Parameter in dem Datensatz von außen nach innen mit fallender Relevanz abgelegt werden. Folglich stehen relevante Parameter am Anfang oder am Ende des Parameterfeldes, nicht relevante Parameter dagegen befinden sich in der Mitte des Parameterfeldes. Des weiteren wird im Rechner 1 normalerweise aus dem aktuellen und dem vorangegangenen Zustand ein Übergangsvektor oder Transition durch die Expertensoftware errechnet, und ,falls die Transition neu ist, in die Liste der möglichen Transitionen eines Zustandes abgespeichert. Zu jeden Datensatz werden zwei gleichgroße Datensätze erstellt, die die zulässigen oder gewünschten Toleranzen nach oben und unten enthalten. Ein Toleranzendatensatz hat den Aufbau eines Zustandsdatensatz, er enthält nur statt der Parameterwerte die positiven und negativen Abweichungen derselben. In der erfindungsgemäßen Ausführungsform enthält das Wertbyte jedoch nur in den unteren 7 Bit den Toleranzwert. Die jeweils höchstwertigen Bits entscheiden darüber, ob es sich bei dem Parameter um einen dominanten oder rezessiven handelt, bzw. ob der Parameter überhaupt relevant für den Vergleich ist oder nicht. Unter einem dominanten Parameter wird einer verstanden, der im Falle eines positiven Fenstervergleichs unabhängig von allen anderen bewirkt, daß der entsprechende Zustand als relevant markiert und dem Hauptrechner 1 übergeben wird. Bei rezessiven Parametern müssen alle rezessiven einen positiven Fenstervergleich ergeben, damit zwei Zustände als gleich gekennzeichnet werden. Dabei ist ein positiver Vergleich ein solcher, bei dem die zu vergleichenden Parameter innerhalb des Toleranzintervalls liegen.

Über die PC-Schnittstelle 10 wird der Datensatz mit den Toleranzdatensätzen in einen Puffer 12 entsprechender Größe des Assoziativ-Speichers 2 übertragen. Der Pufferspeicher 12 umfaßt demnach 3 x 256 Byte. Der Hardwarevergleicher oder Fensterkomparator 13 vergleicht nun diesen Datensatz mit den Datensätzen des Erfahrungsspeichers 17 unter Berücksichtigung der Toleranzen. Die Adressensteuerung des Puffers 12 und des Erfahrungsspeichers 17 wird in der ersten Ausführungsform von der Assoziativ-CPU, in der zweiten Ausführungsform von einer speziellen Logik 20 vorgenommen. Der Vergleich wird byteweise vorgenommen und somit werden die Adressen je nach der Vergleichsrichtung vorwärts oder rückwärts erhöht oder erniedrigt. Durch die einfache Adressgenerierung und die Tatsache, daß zuerst die relevanten Parameter abgearbeitet werden, da sich diese an den Enden des Datensatzes befinden, wird eine Beschleinigung des Vergleichs erreicht. Der Vergleicher liefert als Ergebnis die Anzahl der Parameter innerhalb der angegebenen Grenzen, den Status des Vergleichs und einen Interrupt, wenn ein dominant priorisierter Parameter innerhalb der Toleranzen erkannt wird.

Ist der Datensatz, der einen Zustand beschreibt, noch nicht im Erfahrungsspeicher 17 enthalten, so wird er dort neu aufgenommen. Da das System zu Regelzwecken eingesetzt wird und es somit kompakt ausgeführt ist, hat der Erfahrungsspeicher Platz zum Speichern von ca. 4000 Zuständen. Sind nun alle Speicherplätze mit Erfahrungszuständen belegt, so muß beim Speichern eines neuen, unbekannten Zustandes ein altes Erfahrungsdatum gelöscht werden. Folglich hat das System ein Gedächtnis, das in der Lage ist zu vergessen. Der Erfahrungsdatenschatz kann sich daher nicht unmäßig aufblähen, was eine Verlängerung der Antwortzeiten mit sich bringen würde. Die Echtzeitfähigkeit des Systems bleibt somit gewährleistet.

In jedem Fall erzeugt der Vergleicher 13 eine Liste mit den Anfangsadressen der als gleich oder ähnlich erkannten Zustände. Nach dem Abschluß des Durchsuchens des Erfahrungsspeichers, oder falls der Vergleich früher terminiert wird, übergibt die Assoziativ-CPU die in der Liste aufgeführten Datensätze über die PC-Schnittstelle dem Hauptrechner 1.

Mittels der im Hauptrechner 1 befindlichen Expertensoftware wird an Hand der gefundenen Informationen des AssoziativSpeichers 1 und der dazugehörigen Transitionen entschieden, welche Aktion durchgeführt und mit welchen Regelsignalen in den zu regelnden Prozeß eingegriffen wird.

Ein Schema des in der bevorzugten Form als EPROM ausgebildeten Speichers 11 abgelegten Befehlssatzes der Assoziativ-CPU 15 ist in Fig. 6 gegeben. Nach einer Initialisierung 60 läuft die CPU 15 auf einen Stop 61. Mittels eines Interrupts 62 wird eine Abfrage 63 aktiviert, die feststellt, ob tatsächlich ein Befehl ausgeführt werden soll. Ist dies nicht der Fall, so wird eine Fehlerbehandlungsroutine 64 ausgeführt und die CPU 15 geht zurück in den Stop-Zustand 61. Soll ein Befehl ausgeführt werden, so wird auf den Befehlsvorrat 65 zugegriffen. Dieser besteht aus den Befehlen "Lade aktuellen Zustand mit Toleranzen" 66, "Vergleiche vorwärts" 67, "Vergleiche rückwärts" 68, "Speichere Zustand" 69, "Lösche Zustand" 70, "Gib Anzahl ähnlicher Zustände" 71, "Gib ähnliche Zustände" 72, "Backup" 73, "Restore" 74, "Lösche alles" 75 und "Fehler:unbekannter Befehl" 76.

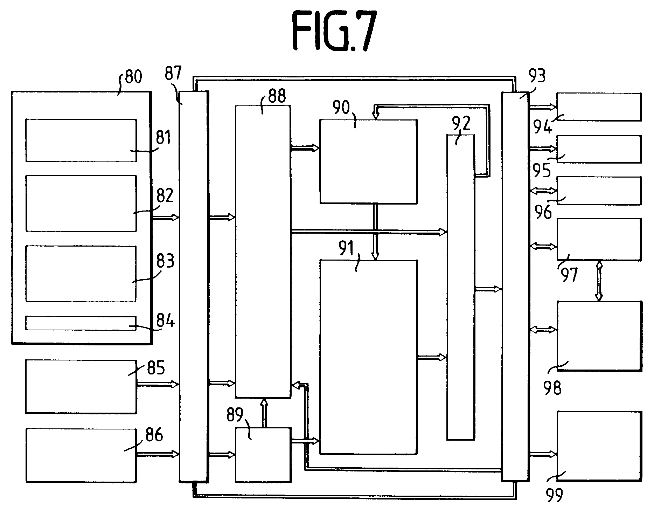

Fig. 7 zeigt eine Anwendung des erfindungsgemäßen Echtzeit-Expertencomputersystems als intelligentes Regelsystem für den Staßenverkehr. Eine im allgemeinen dezentrale Sensor- und Meßanlage 80 mißt Zustandsparameter des Verkehrs, wie die Schadstoffkonzentration 81 von $SO_2$ , $NO_2$ oder andere, die Witterungsbedingungen 82 wie Wind, Temperatur, Nässe, Eis, Schnee oder Sichtbedingungen, die Verkehrssituation wie Fahrzeuganzahl und Geschwindigkeit der Fahrzeuge und das Auftreten von Wildwechsel. Weiter werden besondere Ereignisse 85 wie Baustellen oder Sonderveranstaltungen und ortsfeste Informationen 86 wie der Straßenverlauf erfaßt. Weitere periphere Einheiten sind der Verkehrsfunk 94, der Übergang zum BTX 95, Befehle an und Zustandsmeldungen von einem KFZ 96, Kommunikation mit einer Verkehrsleitzentrale 97 und mit einem Verbund von intelligenten Wechselverkehrszeichen 98 und einer Anzeigeeinheit 99. Alle diese peripheren Einheiten sind über die Schnittstellen 87 und 93 mit dem Regelsystem verbunden. Dabei geben die Einheiten 81 bis 86 nur Informationen in den Rechner, die Einheiten 94,95 und 99 empfangen nur Informationen, während die Einheiten 96,97 und 98 bidirektional mit dem Regelsystem kommunizieren. Die Verkehrleitzentrale 97 und der Wechselverkehrszeichenverbund 98 sind ebenfalls bidirektional miteinander verbunden.

Die Informationen der Einheiten 81 - 86 und 96-98 gelangen über eine Schnittstelle 87 und 93 in einen Ereignisspeicher 88, in dem der Datensatz 56 gebildet wird. Für die ortsfeste Information 86 ist normalerweise ein Festwertspeicher 89 vorgesehen, der der Ereignisspeicher 88 vorgeschaltet ist. Der Datensatz des Ereignisspeichers 88 durchläuft einen Informationsfilter 90, was dem Vergleichen des Datensatzes mit den Erfahrungsdaten entspricht. Der Informationsfilter wirkt auf einen digitalen Erfahrungsspeicher, in dem bereits bekannte Zustände abgelegt sind, d.h. daß selektierte oder dem Datensatz ähnliche Daten aus dem Erfahrungsspeicher 91 zusammen mit dem aktuellen Datensatz in eine intelligente Recheneinheit 92 gelangen. Diese Recheneinheit 92 wirkt wieder zurück auf den Informationsfilter 90, beispielsweise durch Festlegen der Relevanz eines Parameters. Weiterhin bewirkt die intelligente Recheneinheit eine Ausgabe von Steuersignalen und Informationen nach außen über die Schnittstelle 93. Dies kann eine Durchsage von Verkehrsinformation im Verkehrsfunk 94 oder über BTX 95, eine direkte zukünftige Informationen an das KFZ 96, beispielsweise eine zwangsläufige Drosselung der Geschwindigkeit bei Nebel oder Navigationsinformationen, eine Meldung an die Verkehrsleitzentrale 97 oder eine Änderungen an den Verkehrszeichen bzw.der Ampelsteuerung 98 sein. Dadurch werden wiederum die Eingangsparameter des Regelkreises beeinflußt, sodaß sich auf diese Weise ein intelligentes und lernfähiges Regelverhalten ergibt.

Die Anwendung der Erfindung ist nicht auf das Steuern von Verkehrsprozessen begrenzt, sondern kann zum intelligenten Regeln beliebiger Prozesse durch ein Expertensystem benutzt werden.

Bezugszeichenliste

| | |
|---|---|
| 1 | Computer |
| 2 | Assoziativ-Speicher und Komparatoreinheit |
| 3 | Ein-/Ausgabe Schnittstelle |
| 10 | PC-Interface |
| 11 | CPU-Befehlsspeicher |
| 12 | Puffer |
| 13 | Digitaler Fensterkomparator |
| 14 | Backup Interface |
| 15 | CPU |
| 16 | Treiber |
| 17 | Assoziativ-Speicher |
| 18 | Assoziativ-Bus |
| 20 | Logik |
| 21 | Zähler 1 |
| 22 | Zähler 2 |
| 30 | Dateneingang Puffer |
| 31 | Positive Toleranzen |
| 32 | Suchkriterium |
| 33 | Zustandsvektor |
| 34 | Negative Toleranzen |
| 35 | Suchkriterium |
| 36 | Verbindung 31 - 41 |
| 37 | Verbindung 32 - 50 |
| 38 | Verbindung 33 - 41, 42 |
| 39 | Verbindung 34 - 42 |
| 40 | Verbindung 35 - 50 |
| 41 | Addierer |
| 42 | Subtrahierer |
| 43 | Verbindung 41 - 46 |
| 44 | Verbindung 42 - 47 |
| 45 | Erfahrungsdaten-Eingang Komparatoren |
| 46 | Komparator 1 |
| 47 | Komparator 2 |
| 48 | Verbindung 46, 47 - 49 |
| 49 | Zähler 1 |
| 50 | Zähler 2 |
| 51 | Bewertungslogik |
| 52 | Ausgang Fensterkomparator |
| 55 | Meßwertaufnehmer |
| 56 | Datensatz |
| 57 | Liste relevanter Datebsätze |
| 60 | Initialisierung |
| 61 | Stop |
| 62 | Interrupt |
| 63 | Abfrage Befehlsausführung |
| 64 | Fehlerbehandlung |
| 65 | Befehlsvorrat |
| 66 | Zustand und Toleranzen laden |
| 67 | Vergleiche vorwärts |
| 68 | Vergleiche rückwärts |
| 69 | Zustand speichern |
| 70 | Zustand löschen |
| 71 | Anzahl ähnlicher Zustände ausgeben |
| 72 | Ähnliche Zustände ausgeben |
| 73 | Backup |
| 74 | Restore |
| 75 | Alles Löschen |
| 76 | Fehler: unbekannter Befehl |
| 80 | Dezentrale Sensor- und Meßanlagen |
| 81 | Schadstoffkonzentration |
| 82 | Witterungsbedingungen |
| 83 | Verkehr |
| 84 | Wildwechsel |
| 85 | Besondere Ereignisse |
| 86 | Ortsfeste Informationen |
| 87 | Schnittstelle |
| 88 | Ereignisspeicher |
| 89 | Festwertspeicher |
| 90 | Informationsfilter |
| 91 | Digitaler Erfahrungsspeicher |
| 92 | Intelligente Rechnereinheit |
| 93 | Schnittstelle |
| 94 | Verkehrsfunk |
| 95 | BTX |
| 96 | KFZ |
| 97 | Verkehrsleitzentrale |
| 98 | Wechselverkehrszeichenverbund |
| 99 | Anzeigeeinheit |

**Patentansprüche**

1. Echtzeit-Expertencomputersystem zur elektronischen Erfahrungsverarbeitung mit mindestens einem Computersystem, **gekennzeichnet durch** eine mit dem Computersystem (1) gekoppelten Assoziativ-Speichereinheit (2), in deren Speichereinheit (17) die Erfahrungsdaten abgelegt sind und in deren als Schaltung ausgebildeten Komparatoreinheit (13) das Durchsuchen der Erfahrungsdaten nach vorgegebenen Mustern erfolgt, wobei das Suchergebnis zum Steuern und Regeln benutzt wird.

2. System nach Anspruch 1, dadurch gekennzeichnet, daß die Assoziativ-Speichereinheit (2) eine CPU (15), einen Speicher (11) zur Aufnahme des Mikroprogramms der CPU, einen Speicher (17) für die Aufnahme der Erfahrungsdaten, einen Komparator (13) zum Vergleichen und Durchsuchen der Erfahrungsdaten und eine Schnittstelle (10) zur Verbindung mit der Computereinheit (1), umfaßt.

3. System nach Anspruch 2, dadurch gekennzeichnet, daß die Assoziativ-Speichereinheit (2) eine Schnittstelle (14) zum Anschluß eines Backup-Gerätes enthält.

4. System nach Anspruch 2 oder 3, dadurch gekennzeichnet, daß der Komparator (13) als digitaler Fensterkomparator ausgebildet ist, der einen Datenpuffer (12) zur Aufnahme des zu vergleichenden Erfahrungsdatums (33), der positiven (31) und negativen (34) Toleranzen und Suchkriterien (32, 35) aufweist, dem eine Addierer/Subtrahierer-Einheit (41, 42) zur Berechnung des oberen und unteren Grenzwertes nachgeschaltet ist, dem eine Komparatoreinheit(46, 47) zum Vergleichen der Grenzwerte mit einem aus dem Erfahrungsspeicher (17) geladenen Erfahrungsdatum folgt, und daß die Vergleichsergebnisse zusammen mit den Suchkriterien des Datenpuffers einer Bewertungslogik (51) zugeführt werden, deren Ausgang (52) mit der CPU (15) verbunden ist.

5. System nach Anspruch 4, dadurch gekennzeichnet, daß ein Erfahrungsdatum (Zustand) aus einem Kopfteil und einem Parameterteil besteht, daß das Kopfteil am Anfang des Datensatzes steht, daß am Ende des Datensatzes ein inverses Kopfteil steht, und daß sich zwischen dem Kopfteil und dem inversen Kopfteil die Parameter befinden, wobei die relevanten Parameter an den Enden des Datensatzes angeordnet sind.

6. System nach Anspruch 5, dadurch gekennzeichnet, daß das Kopfteil einen Pointer auf die Liste der Übergänge (Transitionen) zwischen den Zuständen, eine Zustandsnummer und eine Bewertungsgröße der Zustandsqualität enthält.

7. System nach Anspruch 6, dadurch gekennzeichnet, daß der digitale Fensterkomparator (13) den Vergleich parameterweise durchführt, wobei die Parameter in der Reihenfolge ihrer Relevanz behandelt werden.

8. System nach einem oder mehreren der Ansprüche 4,5,6 oder 7, dadurch gekennzeichnet, daß die Addierer/Subtrahierer-Einheit (41, 42) aus der Parallelschaltung eines Addierers (41) und eines Subtrahierers (42) und die Komparatoreinheit (46, 47) aus der Parallelschaltung zweier Komparatoren (46, 47) besteht.

9. System nach Anspruch 8, dadurch gekennzeichnet, daß der Bewertungslogik (51) zwei parallele Zähler (49, 59) vorgeschaltet sind, wobei der eine (49) das Vergleichsergebnis der Komparatoreinheit(46, 47) und der andere (50) die Suchkriterien 32, 35) des Puffers (12) aufnimmt.

10. System nach einem oder mehreren der vorangegangenen Ansprüche, dadurch gekennzeichnet, daß die Assoziativ-Speichereinheit (2) über einen Bus-System mit der Computereinheit (1) verbunden ist.

11. System nach einem oder mehreren der vorangegangenen Ansprüche, dadurch gekennzeichnet, daß die Computereinheit (1) parallele und serielle Ein- und Ausgänge (3) enthält.

12. System nach einem oder mehreren der vorangegangenen Ansprüche, dadurch gekennzeichnet, daß mehrere der Echtzeitexpertencomputersysteme zu einem lokalen Netz zusammengeschlossen werden können.

# FIG.1

# FIG.2

# FIG.3

# FIG.4

# FIG.5

# FIG.6

# FIG.7

Europäisches
Patentamt

EUROPÄISCHER RECHERCHENBERICHT

Nummer der Anmeldung

EP    91 11 9994
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,X | DE-A-3 908 879 (KABUSHIKI KAISHA TOSHIBA)<br>* Zusammenfassung *<br>* Spalte 6, Zeile 6 - Zeile 66 * | 1 | G06F9/44<br>G06F15/40<br>G05B13/02 |
| D,Y | | 2-4,8,<br>10,11,12 | |
| | --- | | |
| A | WO-A-8 912 300 (ARIZONA BOARD OF REGENTS)<br>* Seite 1, Zeile 10 - Zeile 30 *<br>* Anspruch 1; Abbildung 3 * | 1,4 | |
| | --- | | |
| Y | SYSTEMS, COMPUTERS, CONTROLS.<br>Bd. 9, Nr. 5, September 1978, SILVER SPRING, MARYLAND, US<br>Seiten 45 - 53;<br>TADAO ICHIKAWA, KEN SAKAMURA, HIDEO AISO:<br>'ARES-An associative processor'<br>* Zusammenfassung *<br>* Seite 45, rechte Spalte, Zeile 7 - Zeile 35 *<br>* Seite 51, linke Spalte, Zeile 1 - rechte Spalte, Zeile 3; Abbildung 7 * | 2-4,8,<br>10,11,12 | |
| | --- | | **RECHERCHIERTE SACHGEBIETE (Int. Cl.5 )** |
| Y | US-A-4 351 023 (D.K. RICHER)<br>* Abbildung *<br>* Zusammenfassung *<br>* Spalte 4, Zeile 33 - Zeile 48 * | 3 | G06F<br>G05B |
| | --- | | |
| Y | US-A-4 504 907 (B.W. MANNING ET AL.)<br>* Abbildung *<br>* Zusammenfassung *<br>* Abbildungen 5,6,15,40 * | 4,8 | |
| | --- | | |
| X | PROC. 29TH CONF. ON DECISION AND CONTROL<br>Dezember 1990, IEEE, NEW YORK, NY, USA<br>Seiten 2374 - 2379;<br>WEI K. TSAI ET AL: 'A Novel Associative Memory for High level Control Functions'<br>* Zusammenfassung *<br>* Seite 2376, rechte Spalte, Zeile 40 - Zeile 45 * | 1 | |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | KINGMA Y. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
   Dokument

EPO FORM 1503 03.82 (P0403)